# EUROPÄISCHE PATENTSCHRIFT

(11) **EP 1 602 225 B1**
(45) Veröffentlichungstag und Bekanntmachung des Hinweises auf die Patenterteilung: **17.10.2007**
(21) Anmeldenummer: 04712500.0
(22) Anmeldetag: 19.02.2004
(51) Int. Cl.: H04M 3/30, H04Q 1/14

(54) **Verteiler für die Telekommunikations- und Datentechnik**
Distributor for telecommunications and data systems
Repartiteur pour des systèmes de télécommunication et d'informatique

(30) Priorität: 08.03.2003 DE 10310208
(43) Veröffentlichungstag der Anmeldung: 07.12.2005
(73) Patentinhaber: ADC GMBH, 14167 Berlin (DE)
(72) Erfinder: FADLER, Georges, 14532 Kleinmachnow (DE); FRANZKE, Jörg, 13503 Berlin (DE)
(86) Internationale Anmeldenummer: PCT/EP2004/001565
(87) Internationale Veröffentlichungsnummer: WO 2004/080044

(56) Entgegenhaltungen:
- DE-U- 20 104 605
- US-B1- 6 453 014

## Beschreibung

Die Erfindung betrifft einen Verteiler mit Testzugang gemäß dem Oberbegriff des Patentanspruchs 1.

Derartige Verteiler wie beispielsweise Haupt- oder Kollokationsverteiler dienen zum Verteilen der beispielsweise von einer Vermittlungsstelle ankommenden Ader zu den einzelnen Teilnehmern. Physikalisch beinhalten derartige Verteiler eine Systemseite und eine Teilnehmerseite, wobei diese jeweils durch mindestens ein Verteiler-Anschlussmodul gebildet werden. Im Allgemeinen umfasst jede Seite hingegen eine Vielzahl derartiger Verteiler-Anschlussmodule. Die Verteiler-Anschlussmodule weisen dabei Eingangs- und Ausgangskontakte auf. Auf der Systemseite beispielsweise sind über die Eingangskontakte die Adern von der Vermittlungsstelle verbunden. Die Eingangs- und Ausgangskontakte sind im Regelfall direkt oder aber über Funktionselemente verbunden. Die Ausgangskontakte auf der Systemseite bilden eine Rangierseite und sind hierzu vorzugsweise als Schneid-Klemm-Kontakte ausgebildet. Entsprechend sind die Eingangskontakte auf der Teilnehmerseite ebenfalls als Schneid-Klemm-Kontakte ausgebildet und bilden ebenfalls eine Rangierseite. Über die Ausgangskontakte der Teilnehmerseite wird dann die elektrische Verbindung zum Teilnehmer hergestellt. Die an den Eingangskontakten der Systemseite bzw. den Ausgangskontakten der Teilnehmerseite angeschlossenen Adern sollen möglichst wenig geändert werden, so dass eine Änderung der Zuordnung durch Änderung an den Rangierseiten erfolgt.

Zur Überprüfung der Verbindung ist es bekannt, die elektrische Verbindung über ein Schaltelement auszutrennen und auf eine Testeinheit zu schalten. Diese Schaltelemente sind in einer Zugangsmatrix angeordnet, so dass nacheinander alle Verbindungen durchgetestet werden können.

Derartige Zugangsmatrizen sind beispielsweise in der US 6,434,221 B1 oder der WO 01/93 548 dargestellt. Dort sind diese Zugangsmatrizen als Blockschaltbild außerhalb der Hauptverteiler (MDF) dargestellt, was jedoch physikalisch im Regelfall nicht zutreffend ist. Aufgrund der oben genannten Randbedingung, dass die Adern an den Eingangskontakten der Systemseite bzw. an den Ausgangskontakten der Teilnehmerseite möglichst wenig bewegt werden sollen, werden die Zugangsmatrizen physikalisch zwischen den beiden Rangierseiten eingeschleift.

Des weiteren gewinnt zunehmend DSL (Digital Subscriber Line) an Bedeutung. Dies hat zur Folge, dass zusätzlich auch die Splitter für DSL in die Verteiler integriert werden müssen.

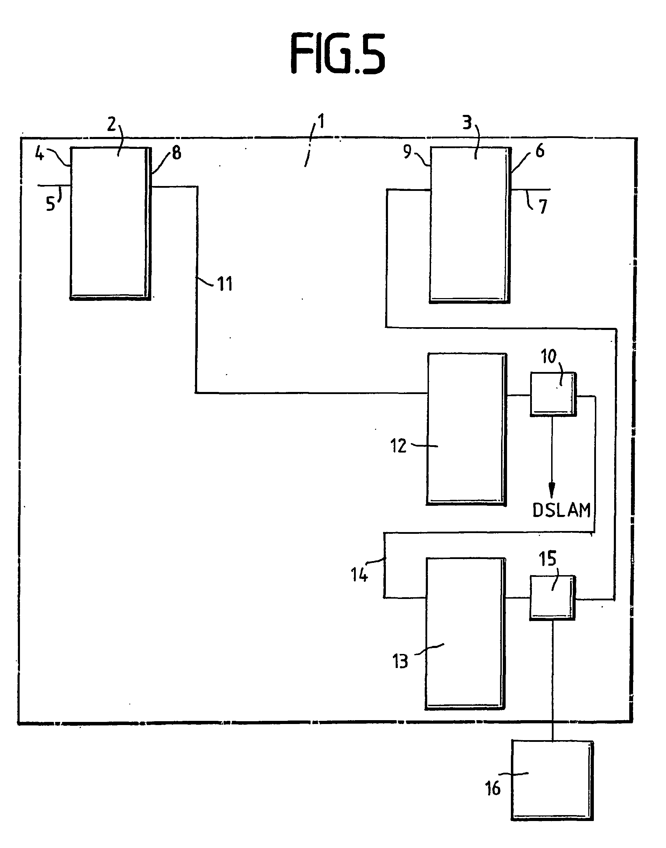

In der Fig. 5 ist ein derartiger Verteiler 1 nach dem Stand der Technik dargestellt, wobei aus Gründen der Übersicht nur die Verdrahtung einer Ader dargestellt ist. Der Verteiler 1 umfasst mindestens ein Verteiler-Anschlussmodul 2 auf der Systemseite und mindestens ein Verteiler-Anschlussmodul 3 auf der Teilnehmerseite. Die Eingangsseite 4 verbindet die ankommenden Adern 5 von einer Vermittlungsstelle mit dem Verteiler 1. Entsprechend verbindet die Ausgangsseite 6 der Teilnehmerseite die abgehenden Adern 7 mit den Endstellen. Die Ausgangsseite 8 des Verteiler-Anschlussmoduls 2 und die Eingangsseite 9 des Verteiler-Anschlussmoduls 3 stellen die Rangierseiten dar, d.h. wenn eine Verbindung geändert werden soll, so erfolgt diese durch eine Änderung der Verschaltung zwischen den Rangierseiten. Um nun den DSL-Splitter 10 einzuschleifen, wird die Ader 11 von der Rangierseite des Verteiler-Anschlussmoduls 2 auf ein weiteres Verteiler-Anschlussmodul 12 geschaltet, das ausgangsseitig mit den DSL-Splitter 10 verbunden ist. Der eine Port des DSL-Splitters 10 ist mit dem DSLAM (Digital Subscriber Line Access Multiplexer) und der andere Port mit einem weiteren Verteiler-Anschlussmodul 13 verbunden. Über das Verteiler-Anschlussmodul 13 wird eine Doppelader 14 mit einer Zugangsmatrix 15 verbunden, wobei der eine Port der Zugangsmatrix 15 mit einer externen Testeinheit 16 und der andere Port mit dem Verteiler-Anschlussmodul 3 der Teilnehmerseite verbunden ist.

Aus der US-6,453,014 B1 und der WO99/36987 A1 ist ein Verteiler für die Telekommunikations- und Datentechnik gemäß dem Oberbegriff des Anspruchs 1 bekannt.

Aus der DE 201 04 605 U1 ist ein Anschlussblock einer Verteilereinrichtung der Telekommunikationstechnik bekannt, mit zumindest einer Gruppe von Teilnehmer-Kontakten, zumindest einer Gruppe von XDSL-Kontakten, zumindest zwei Gruppen von Systemkontakten, wobei ein jeweiliger Systemkontakt der ersten Gruppe mit einem Systemkontakt der zweiten Gruppe verbunden ist, wobei weiter mindestens die Kontakte zumindest einer Gruppe aus Trennkontakten bestehen und zumindest einer Splitterbaugruppe, die mit den Teilnehmerkontakten, den XDSL-Kontakten und den Systemkontakten der ersten und/oder zweiten Gruppe verbunden ist. Die Splitterbaugruppe wird im Wesentlichen durch eine Leiterplatte mit den daran angebrachten und elektrisch verbundenen Filterbauteilen gebildet.

Der Erfindung liegt daher das technische Problem zugrunde, einen Verteiler zu schaffen, mittels dessen der schaltungstechnische Aufwand zum Einschleifen einer Zugangsmatrix und eines DSL-Splitters verringert wird.

Die Lösung des technischen Problems ergibt sich durch die Gegenstände mit den Merkmalen des Patentanspruchs 1. Weitere vorteilhafte Ausgestaltungen der Erfindung ergeben sich aus den Unteransprüchen.

Hierzu wird die Zugangsmatrix im Verteiler-Anschlussmodul der Teilnehmerseite oder der Systemseite angeordnet. Hierdurch ist nicht nur ein Verteiler-Anschlussmodul einsparbar, sondern auch die notwendige Verdrahtung vom DSL-Splitter zum Verteiler-Anschlussmodul der Systemseite erheblich reduzierbar, was aufgrund der Vielzahl der Adern zu einer erheblichen Kosteneinsparung führt. Der Testbus in dem Verteiler-Anschlussmodul ist als 2-Drahtbus ausgebildet, was die notwendige Verdrahtung weiter reduziert. Dies ist insbesondere deshalb hinnehmbar, da das Testen zeitunkritisch ist. Dabei werden dann mehrere Verteiler-Anschlussmodule über eine Test-Matrix mit der Testeinheit verbunden.

Die Zugangsmatrix wird vorzugsweise durch Relais gebildet, mittels derer die Adern wahlweise auf einen zur Testeinheit führenden Testbus oder zum zugeordneten Ausgangskontakt des Verteiler-Anschlussmoduls schaltbar sind. Relais sind ausreichend klein ausbildbar, wobei diese dabei eine hohe Zuverlässigkeit aufweisen.

Die Relais werden vorzugsweise auf einer Leiterplatte im Verteiler-Anschlussmodul angeordnet.

Weiter vorzugsweise erfolgt die Ansteuerung der Zugangsmatrix über einen Mikroprozessor, der vorzugsweise auf der Leiterplatte angeordnet ist.

Der Mikroprozessor ist vorzugsweise über eine gemeinsame Power/Controll-Schnittstelle ausgebildet, über die der Mikroprozessor mit elektrischer Energie und mit Steuersignalen versorgt wird. Prinzipiell können Power und Control auch als getrennte Schnittstellen ausgebildet sein.

In den elektrischen Verbindungen sind DSL-Splitter angeordnet.

Die DSL-Splitter sind in den Verteiler-Anschlussmodulen angeordnet. Dabei können die DSL-Splitter gemeinsam mit der Zugangsmatrix im gleichen Verteiler-Anschlussmodul angeordnet sein. Alternativ können die DSL-Splitter in den Verteiler-Anschlussmodulen der Systemseite und die Zugangsmatrix in den Verteiler-Anschlussmodulen der Teilnehmerseite angeordnet werden.

Weiter vorzugsweise werden in den Verteiler-Anschlussmodulen der Teilnehmerseite Überspannungsschutzelemente angeordnet.

Die Erfindung wird nachfolgend anhand eines bevorzugten Ausführungsbeispiels näher erläutert. Die Fig. zeigen:
- Fig. 1: ein schematisches Blockschaltbild eines Verteilers mit integrierter Zugangsmatrix in dem Verteiler-Anschlussmodul auf der Teilnehmerseite,
- Fig. 2: ein schematisches Blockschaltbild mit zusätzlich integrierten DSL-Splittern,
- Fig. 3: ein schematischen Blockschaltbild mit integrierten DSL-Splittern und Zugangsmatrix in unterschiedlichen Verteiler-Anschluss-modulen,
- Fig. 4: ein schematisches Blockschaltbild einer Zugangsmatrix und
- Fig. 5: ein schematisches Blockschaltbild eines Verteilers mit Zugangsmatrix und DSL-Splittern (Stand der Technik).

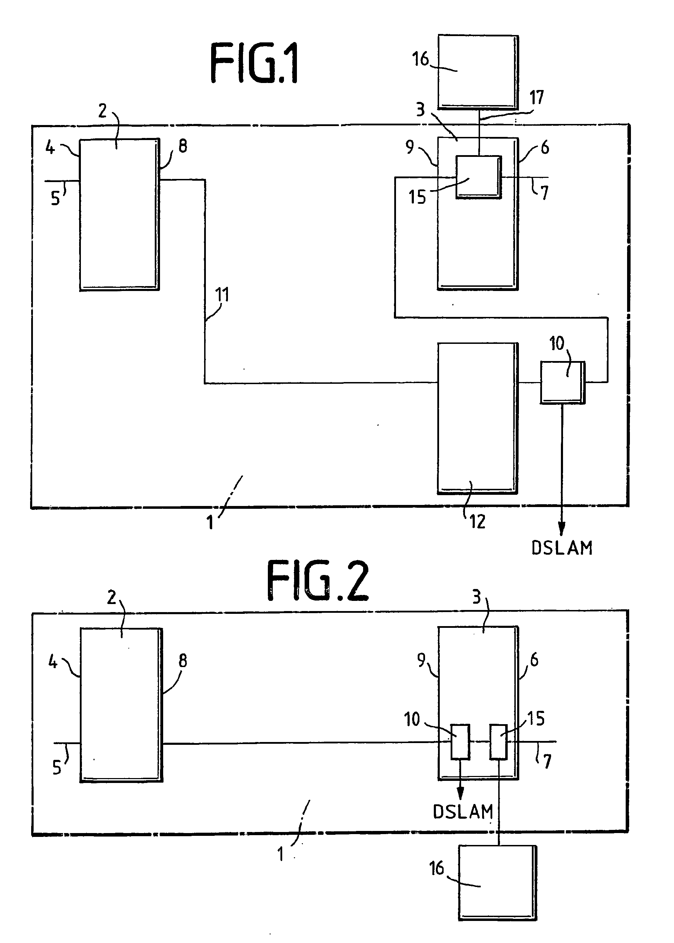

In der Fig. 1 ist ein Verteiler 1 dargestellt, umfassend Verteiler-Anschlussmodule 2 auf der Systemseite und Verteiler-Anschlussmodule 3 auf der Teilnehmerseite. An der Eingangsseite 4 der Verteiler-Anschlussmodule 2 werden von einer Vermittlungsstelle ankommende Adern 5 angeschlossen. Entsprechend werden von der Ausgangsseite 6 des Verteiler-Anschlussmoduls 3 zu Teilnehmern führende Adern 7 angeschlossen. Die Ausgangsseite 8 bzw. die Eingangsseite 9 der Verteiler-Anschlussmodule 2 bzw. 3 bilden die Rangierseite des Verteilers 1. Zum Einschleifen der DSL-Splitter 10 werden die Adern 11 auf ein weiteres Verteiler-Anschlussmodul 12 geschaltet, an dem ausgangsseitig die DSL-Splitter 10 fest verdrahtet sind. Ein Port der DSL-Splitter 10 ist jeweils mit einem DSLAM und der andere mit der Eingangsseite 9 des Verteiler-Anschlussmoduls 3 verbunden. In dem Verteiler-Anschlussmodul 3 ist eine Zugangsmatrix 15 angeordnet. Über die Zugangsmatrix 15 können die von den DSL-Splittern 10 kommenden Adern wahlweise über einen Testbus 17 auf eine Testeinheit 16 oder auf die abgehenden Adern 7 geschaltet werden. Durch die Integration der Zugangsmatrix 15 in das Verteiler-Anschlussmodul 3 ist somit ein Verteiler-Anschlussmodul mit zugehöriger Verdrahtung einsparbar (siehe zum Vergleich Fig. 5). Aufgrund der Tatsache, dass üblicherweise eine Vielzahl von Verteiler-Anschlussmodulen 2, 3 in einem Verteiler angeordnet sind, stellt dies eine erhebliche Einsparung pro Verteiler 1 dar.

Hierzu wird in dem Hohlraum des Gehäuses des Verteiler-Anschlussmoduls 3 eine Leiterplatte angeordnet, auf der die Zugangsmatrix 15 sowie gegebenenfalls Schutzelemente angeordnet sind. Die Zugangsmatrix 15 liegt dabei elektrisch zwischen den Eingangs- und Ausgangskontakten. Zusätzlich müssen Ausgänge für den Testbus 17 und weitere Eingänge für die Zugangsmatrix 15 zur Verfügung gestellt werden, was später noch näher erläutert wird.

Allgemein sei angemerkt, dass die Begriffe Eingangs- und Ausgangskontakte hier nur zur anschaulichen Beschreibung dienen, da physikalisch die Daten in beiden Richtungen übertragen werden. Des weiteren sei angemerkt, dass Fig. 1 jeweils nur die notwendige Verdrahtung einer Ader zeigt. Typischerweise können mittels eines Verteiler-Anschlussmoduls acht oder zehn Doppeladern verschaltet werden

In der Fig. 2 ist eine alternative Ausführungsform dargestellt, bei der zusätzlich die DSL-Splitter 10 in das Verteiler-Anschlussmodul 3 integriert sind, wodurch das Einsparpotential noch einmal verdoppelt wird.

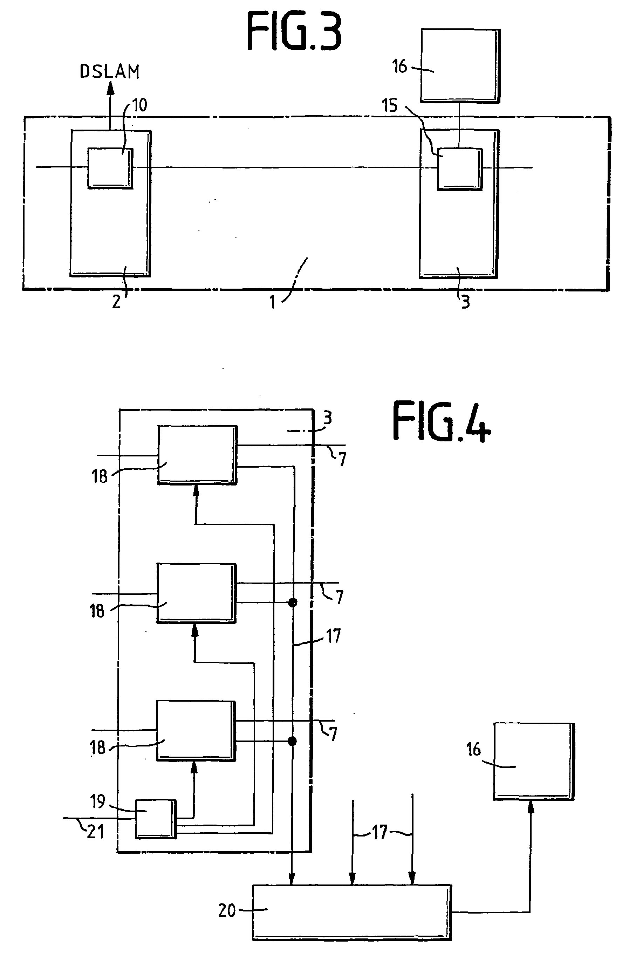

In der Fig. 3 ist eine weitere alternative Ausführungsform dargestellt. Bei dieser Ausführungsform werden die DSL-Splitter 10 in das Verteiler-Anschlussmodul 2 der Systemseite integriert. Dies vereinfacht beispielsweise die Bestückung und Verdrahtung auf den Leiterplatten, da bei der Ausführungsform gemäß Fig. 2 sehr viele Bauelemente auf einer Leiterplatte angeordnet werden müssen, was Platzprobleme verursacht. Alternativ zu der Ausführungsform gemäß Fig. 2 können auch die DSL-Splitter 10 und die Zugangsmatrix 15 gemeinsam in das Verteiler-Anschlussmodul 2 integriert werden. Dies ist insbesondere dann vorteilhaft, wenn der Netzbetreiber die Systemseite genormt hat, jedoch auf der Teilnehmerseite unterschiedliche Verteiler-Anschlussmodule 3 Anwendung finden.

In der Fig. 4 ist ein schematisches Blockschaltbild einer Zugangsmatrix dargestellt, wobei diese aus einer der Anzahl der zu schaltenden Adern entsprechenden Anzahl von Schaltelementen, vorzugsweise Relais 18, besteht. Den Relais 18 ist ein gemeinsamer Mikroprozessor 19 zugeordnet. Über den Testbus 17 sind alle Relais 18 mit einer Testmatrix 20 verbunden, die mit der Testeinheit 16 verbunden ist. Der Mikroprozessor 19 wird über einen Eingang 21 mit elektrischer Energie und mit Steuerbefehlen versorgt, wobei dieser Eingang 21 vorzugsweise als Luftschnittstelle ausgebildet ist. Der Mikroprozessor 19 steuert die Relais 18 nacheinander an, so dass jeweils immer nur ein Relais 18 mit dem Testbus 17 verbunden ist. Über die Testmatrix 20 können dann nacheinander verschiedene Verteiler-Anschlussmodule 3 mit ihrem Testbus 17 zur Testeinheit 16 gemultiplext werden.

Die Eingangs- und Ausgangskontakte der Verteiler-Anschlussmodule 2, 3 können unterschiedlich gestaltet sein. Vorzugsweise sind alle Kontakte als Schneid-Klemm-Kontakte ausgebildet. Allerdings sind auch Ausführungsformen möglich, wo die Schneid-Klemm-Kontakte beispielsweise mit RJ-45-Buchsen oder anderen Buchsen für vorkonfektionierte Stecker kombiniert werden können.

### Bezugszeichenliste

- 1): Verteiler
- 2): Verteiler-Anschlussmodul (Systemseite)
- 3): Verteiler-Anschlussmodul (Teilnehmerseite)
- 4): Eingangsseite (Systemseite)
- 5): Adern
- 6): Ausgangsseite (Teilnehmerseite)
- 7): Adern
- 8): Ausgangsseite (Systemseite)
- 9): Eingangsseite (Teilnehmerseite)
- 10): DSL-Splitter
- 11): Ader
- 12): Verteiler-Anschlussmodul
- 13): Verteiler-Anschlussmodul
- 14): Doppelader
- 15): Zugangsmatrix
- 16): Testeinheit
- 17): Testbus
- 18): Relais
- 19): Mikroprozessor
- 20): Testmatrix
- 21): Eingang

## Patentansprüche

1. Verteiler für die Telekommunikations- und Datentechnik, wobei der Verteiler eine Systemseite und eine Teilnehmerseite aufweist, die jeweils durch mindestens ein Verteiler-Anschlussmodul gebildet werden, wobei die Verteiler-Anschlussmodule jeweils eine Rangierseite aufweisen, über die elektrische Verbindungen zwischen der Systemseite und der Teilnehmerseite veränderbar sind, umfassend eine Zugangsmatrix, über die die elektrischen Verbindungen zwischen der Systemseite und der Teilnehmerseite geführt sind, wobei mittels der Zugangsmatrix die elektrische Verbindung durchgeschaltet ist oder wahlweise über einen Testbus auf eine Testeinheit geschaltet ist, wobei die Zugangsmatrix (15) im Verteiler-Anschlussmodul (3, 2) der Teilnehmerseite oder der Systemseite angeordnet ist, wobei die Testbusse (17) mehrerer Verteiler-Anschlussmodule (3, 2) über eine Test-Matrix (20) mit einer Testeinheit (16) verbunden sind, wobei der Testbus (17) eines Verteiler-Anschlussmoduls als 2-Drahtleitung ausgebildet ist,
**dadurch gekennzeichnet, dass** mindestens in einer elektrischen Verbindung ein DSL-Splitter (10) angeordnet ist, und der oder die DSL-Splitter (10) zusammen mit der Zugangsmatrix (15) in dem Verteiler-Anschlussmodul (2, 3) angeordnet sind.

2. Verteiler nach Anspruch 1, **dadurch gekennzeichnet, dass** die Zugangsmatrix (15) durch Relais (18) gebildet ist.

3. Verteiler nach Anspruch 2, **dadurch gekennzeichnet, dass** die Relais (18) auf einer Leiterplatte angeordnet sind.

4. Verteiler nach einem der vorangegangenen Ansprüche, **dadurch gekennzeichnet, dass** der Zugangsmatrix (15) ein Mikroprozessor (19) zugeordnet ist.

5. Verteiler nach Anspruch 4, **dadurch gekennzeichnet, dass** der Mikroprozessor (19) mit einer Power/Controll-Schnittstelle ausgebildet ist.

## Claims

1. Distribution frame for telecommunications and data technology, the distribution frame having a system side and a subscriber side, which are each formed by at least one distribution frame connection module, the distribution frame connection modules each having a jumper side by means of which the electrical connections between the system side and the subscriber side can be changed, comprising an access matrix by means of which the electrical connections are routed between the system side and the subscriber side, the electrical connection being passed on by means of the access matrix or else being connected to a test unit via a test bus, the access matrix (15) being arranged in the distribution frame connection module (3, 2) on the subscriber side or the system side, wherein the test buses (17) of two or more distribution frame connection modules (2, 3) being connected to a test unit (16) via a test matrix (20), wherein the test bus (17) of one distribution frame connection module being in the form of a 2-wire cable, **characterized in that** a DSL splitter (10) is arranged in at least one electrical connection, and the DSL splitter(s) (10) is (are) arranged, together with the access matrix (15), in the distribution frame connection module (2, 3).

2. Distribution frame according to Claim 1, **characterized in that** the access matrix (15) is formed by relays (18).

3. Distribution frame according to Claim 2, **characterized in that** the relays (18) are arranged on a printed circuit board.

4. Distribution frame according to one of the preceding claims, **characterized in that** the access matrix (15) has an associated microprocessor (19).

5. Distribution frame according to Claim 4, **characterized in that** the microprocessor (19) has a power/control interface.

## Revendications

1. Répartiteur pour des systèmes de télécommunication et d'informatique, dans lequel le répartiteur comprend un côté système et un côté utilisateur, qui sont chaque fois formés par au moins un module de raccordement de répartiteur, dans lequel les modules de raccordement de répartiteur comprennent chaque fois un côté de connexions, par lequel des liaisons électriques entre le côté système et le côté utilisateur peuvent être changées, comportant une matrice d'accès par laquelle les liaisons électriques entre le côté système et le côté utilisateur sont menées, dans lequel la liaison électrique est établie ou au choix est connectée par un bus de test à une unité de test au moyen de la matrice d'accès, dans lequel la matrice d'accès (15) est disposée dans le module de raccordement de répartiteur (3,2) du côté utilisateur ou du côté système, dans lequel les bus de test (17) de plusieurs modules de raccordement de répartiteur (3, 2) sont reliés à une unité de test (16) par une matrice de test (20), dans lequel le bus de test (17) d'un module de raccordement de répartiteur est une ligne bifilaire, **caractérisé en ce qu'**un distributeur DSL (10) est disposé au moins dans une liaison électrique, et le ou les distributeur(s) DSL (10) est/sont disposé(s) dans le module de raccordement de répartiteur (2, 3) avec la matrice d'accès (15).

2. Répartiteur selon la revendication 1, **caractérisé en ce que** la matrice d'accès (15) est formée par des relais (18).

3. Répartiteur selon la revendication 2, **caractérisé en ce que** les relais (18) sont disposés sur une plaquette de circuits imprimés.

4. Répartiteur selon l'une quelconque des revendications précédentes, **caractérisé en ce qu'**un microprocesseur (19) est associé à la matrice d'accès (15).

5. Répartiteur selon la revendication 4, **caractérisé en ce que** le microprocesseur (19) est réalisé avec une interface Power/Control.
